Europäisches Patentamt

European Patent Office

Office européen des brevets

(19)

(11) Publication number: **0 196 908**
**A2**

(12)

# EUROPEAN PATENT APPLICATION

(21) Application number: **86302392.5**

(22) Date of filing: **01.04.86**

(51) Int. Cl.⁴: **F 16 H 35/06**
**F 16 H 15/50**

(30) Priority· **01.04.85 JP 69509/85**

(43) Date of publication of application:
**08.10.86 Bulletin 86/41**

(84) Designated Contracting States:
**DE FR GB**

(71) Applicant: **MITSUBISHI DENKI KABUSHIKI KAISHA
2-3, Marunouchi 2-chome Chiyoda-ku
Tokyo 100(JP)**

(72) Inventor: **Kaneyuki, Kazutoshi c/o Himeji Works
Mitsubishi Denki K.K. 840 Chiyoda-cho
Himeji City Hyogo Prefecture(JP)**

(74) Representative: **Lawson, David Glynne et al,
MARKS & CLERK 57-60 Lincoln's Inn Fields
London WC2A 3LS(GB)**

(54) Drive apparatus for auxiliary equipment.

(57) A drive apparatus for auxiliary equipment of a motor has a planetary cone reduction gear 11 housed within a pulley 4 which belt-drives auxiliary equipment. The drive apparatus is mounted on a stationary portion 8 of the motor by a fastener 9 which secures a stationary plate 5 of the apparatus to the stationary portion of the motor. A shock absorbing member 30, 31 is provided between the fastener and the stationary plate to absorb vibrations of the apparatus during operation and to compensate for dimensional inaccuracies, preventing stresses when the apparatus is mounted on the motor.

./...

EP 0 196 908 A2

FIG. 2

0196908

799 P 52085

## BACKGROUND OF THE INVENTION

This invention relates to a drive apparatus for the auxiliary equipment of a motor. and more particularly but not exclusively to the case in which the motor is the engine of an automobile.

In an automobile. engine auxiliary equipment such as charging generators. water pumps. air conditioning compressors. and oil pumps for hydraulic servo steering is belt-driven by a drive pulley mounted on the end of the crankshaft of the engine. This auxiliary equipment is generally designed to be operated at low speeds. and if driven at the same speed as the engine when the engine is running at high speeds. the operation of the equipment would produce considerable power losses. Therefore. means are generally provided for adjusting the rotational speed of the drive pulley for the auxiliary equipment with respect to the rotational speed of the engine so that the auxiliary equipment can be operated at suitable speeds.

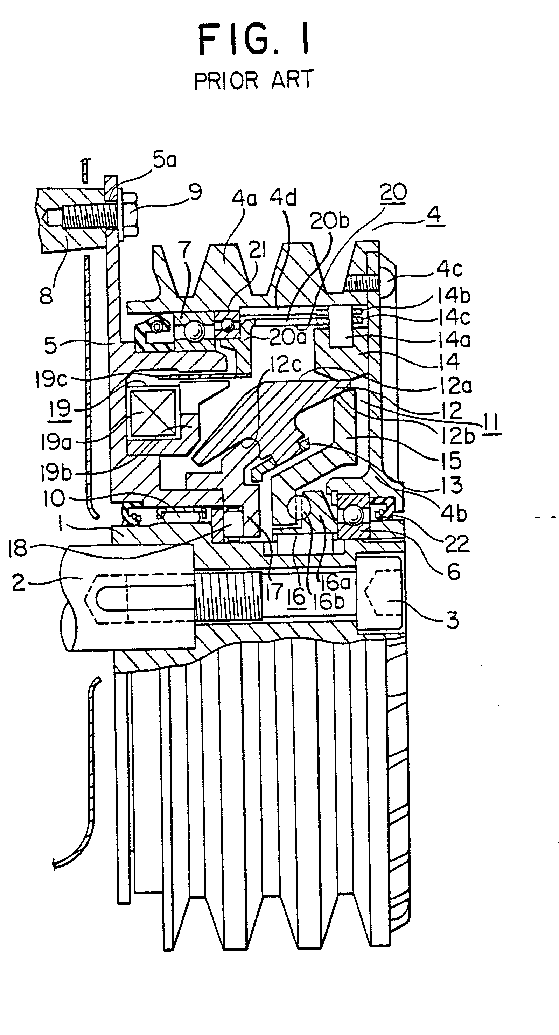

Figure 1 shows one type of auxiliary equipment drive apparatus which has been proposed in the past. In this apparatus. a rotating input member in the form of a hollow input shaft 1 is directly connected to the crankshaft 2 of an engine by a bolt 3. A rotating output member in the form of a pulley 4 is rotatably supported on the input shaft 1 and on a stationary plate 5. The pulley 4 comprises a peripheral casing 4a and an end plate 4b which is secured to the casing 4a by screws 4c. The pulley 4 drives a number of pieces of unillustrated auxiliary equipment by belts which are wound around the pulley casing 4a.

1

The end plate 4b is rotatably supported by the input shaft 1 through a ball bearing 6, while the peripheral casing 4a is rotatably supported by the stationary plate 5 through another ball bearing 7. The stationary plate 5 is secured to a stationary portion of the engine in the form of a boss 8 by bolts 9 which pass through bolt holes 5a formed in the stationary plate 5. A roller bearing 10 is provided between the input shaft 1 and a flange portion of the stationary plate 5 which surrounds the input shaft 1.

Between the input shaft 1 and the peripheral casing 4a of the pulley 4 is an adjustable, stepless, frictional speed change mechanism in the form of a planetary cone reduction gear 11 which transmits drive force from the input shaft 1 to the pulley 4 at an adjustable speed. The planetary cone reduction gear 11 has a plurality of planetary cones 12 which are rotatably mounted by their stems on a cone support ring 13 which surrounds the input shaft 1 and can rotate with respect thereto. Each of the cones 12 has a first frictional transmission surface 12a which forms the top surface of the cone 12, a second frictional transmission surface 12b which forms the base of the cone 12, and a third frictional transmission surface 12c which forms the periphery of the stem of the cone 12. The axis of each cone 12 is sloped with respect to the axis of the input shaft 1 so that a line which is parallel to the axis of the input shaft 1 can be drawn from the vertex of the cone 12 to its base along its top surface. The first frictional transmission surface 12a of each cone 12 frictionally engages with the inner surface of a speed change ring 14 which is concentrically disposed with respect to the input shaft 1. The speed change ring 14 has a plurality of pins

2

14a secured to its outer surface. and on each of these pins 14a are rotatably mounted two roller keys 14b and 14c. The outer roller keys 14b are disposed inside corresponding axially-extending grooves 4d formed in the inner surface of the peripheral casing 4a of the pulley 4. With this structure. the rotation of the speed change ring 14 is transmitted to the peripheral casing 4a of the pulley 4 by the outer roller keys 14b. causing the pulley 4 to rotate at the same speed as the speed change ring 14. but at the same time. the speed change ring 14 is able to freely move in the axial direction of the pulley 4. The second frictional transmission surface 12b of each cone 12 is in frictional engagement with the outer periphery of an input ring 15 which surrounds the input shaft 1. The input ring 15 is caused to rotate together with the input shaft 1 by a transmission mechanism 16 comprising a first race 16a and a plurality of balls 16b. The balls 16b are held between the undulating surface of the first race 16a and a similar undulating surface of a second race which is formed on the inner portion of the input ring 15. When the input shaft 1 is rotated, the transmission mechanism 16 exerts a torque on the input ring 15 as well as a force in the axial direction which causes the outer end of the input ring 15 to contact with the second frictional transmission surface 12b of each of the planetary cones 12. The third frictional transmission surface 12c of each planetary cone 12 is in frictional engagement with the outer peripheral surface of a stationary guide ring 17 which is secured to the stationary plate 5. When the planetary cones 12 are caused to rotate about their axes by the rotation of the input ring 15, the frictional engagement between the guide ring 17 and the third frictional transmission surfaces 12c causes the planetary cones 12 to revolve about the axis of the input shaft 1. A roller bearing 18 is disposed between the guide ring 17 and the input shaft 1.

The reduction ratio of the reduction gear 11 can be adjusted by moving the speed change ring 14 in the axial direction of the input shaft 1. and this is accomplished by a reduction ratio adjustment mechanism in the form of an overcurrent electromagnetic brake 19 and a cylindrical cam 20. The overcurrent electromagnetic brake 19 has an electromagnetic coil 19a which is mounted on the stationary plate 5 and which uses the stationary plate 5 as a portion of a magnetic path. an electromagnetic pole 19b which is also secured to the stationary plate 5. and a cylindrical overcurrent cup 19c which surrounds the pole 19b and which is made of a material with good electrical conductivity. The cylindrical cam 20 is a tubular member having a flange 20a which is integral with the overcurrent cup 19c and a plurality of axially-extending cam surfaces 20b which confront the inner roller keys 14c mounted on the pins 14a of the speed change ring 14. The cylindrical cam 20 and the overcurrent cup 19c are rotatably supported by the pulley casing 4a through a ball bearing 21. A number of packing rings 22 are disposed between the input shaft 1. the pulley 4. and the stationary plate 5 so as to prevent lubricating oil from leaking from the inside of the pulley 4.

The operation of this conventional drive apparatus is as follows. When the input shaft 1 is rotated by the crankshaft 2 of the engine. the input ring 15 is caused to rotate by the transmission mechanism 16. and the planetary cones 12 are caused to rotate about their axes. At the same time, due to the frictional engagement between the planetary cones 12 and the stationary guide ring 17. the planetary cones 12 revolve about the input shaft 1, performing planetary motion. The frictional engagement between the planetary cones 12 and the speed change ring 14 causes the speed change ring 14 to rotate about the center of the input shaft 1. and this rotation is transmitted to the pulley casing 4a by the outer roller keys 14b. The pulley 4 thus rotates at the same speed as the speed change ring 14. and the unillustrated auxiliary equipment is belt-driven by the pulley 4.

The reduction ratio of the reduction gear 11 can be set at a desired value by moving the speed change ring 14 in the axial direction of the input shaft 1. and this is done by controlling the damping force exerted by the overcurrent electromagnetic brake 19. When the speed change ring 14 rotates, rotational force is transmitted to the cam surfaces 20b of the cylindrical cam 20 by the inner roller keys 14c. and this causes the cylindrical cam 20 and the overcurrent cap 19c to rotate as a single body at the same speed as the speed change ring 14. When the electromagnetic coil 19a of the overcurrent electromagnetic brake 19 is excited, a damping force is exerted on the overcurrent cup 19c, and this causes the cam surfaces 20b to press against the inner roller keys 14c. and a longitudinally-directed cam force is exerted on the speed change ring 14 through the inner roller keys 14c. This force acts to move the speed change ring 14 in the axial direction of the input shaft 1. At the same time, in a planetary cone reduction gear of this type. the planetary motion of the planetary cones 12 produces a longitudinally-directed biasing force on the speed change ring

5

14. In this conventional mechanism. the cam surfaces 20b are shaped such that the longitudinally-directed force which is exerted on the speed change ring 14 by the overcurrent electromagnetic brake 19 through the cam surfaces 20b is opposite in direction to the biasing force on the speed change ring 14 produced by the planetary motion. Therefore. when a damping force is applied to the overcurrent cup 19c, the speed change ring 14 will move to the point on the top surfaces of the planetary cones 12 where the longitudinally-directed force exerted on it by the cam surfaces 20b is balanced by the biasing force. By adjusting the damping force exerted on the overcurrent cup 19c, the speed change ring 14 can be moved to any desired position along the top surfaces of the planetary cones 12. The damping force produced by the overcurrent electromagnetic brake 19 is automatically controlled by an unillustrated control circuit which automatically adjusts the exciting current of the electromagnetic coil 19a based on operating conditions.

The conventional drive apparatus described above is mounted on an engine by being directly connected to bosses 8 of the engine by bolts 9. This manner of mounting the apparatus can easily result in abnormal vibrations, since there is a difference in the modes and phases of vibration of the crankshaft 2 and the boss 8. These abnormal vibration reduce the performance of the apparatus. Furthermore. if the dimensions of the apparatus and the boss 8 are not precise, the mounting of the apparatus on the engine bosses 8 can produce strains in the apparatus. which reduces the durability of bearings and other parts. In order to prevent such strains. it is necessary to machine the boss 8 and the stationary plate 5 in order to ensure positional accuracy.

and this increases manufacturing costs.

## SUMMARY OF THE INVENTION

It is an object of the present invention to overcome the problems described above and to provide an auxiliary equipment drive apparatus which can be mounted on an engine without abnormal vibrations developing in the apparatus during operation.

It is another object of the present invention to provide an auxiliary equipment drive apparatus which can be mounted on an engine without strains developing in the apparatus and which does not need to have high dimensional accuracy.

An auxiliary equipment drive apparatus according to the present invention has a stationary plate which is mounted on an engine boss by a fastener such as a bolt. A shock absorbing member is disposed between the stationary plate of the drive apparatus and the fastener. The shock absorbing member absorbs vibrations and prevents abnormal vibrations from developing in the drive apparatus. Furthermore. the shock absorbing member compensates for dimensional inaccuracies and prevents stresses from developing in the drive apparatus when it is mounted on an engine.

## BRIEF DESCRIPTION OF THE DRAWINGS

Figure 1 is a partially cross-sectional side view of a conventional auxiliary equipment drive apparatus.

Figure 2 is a partially cross-sectional side view of an embodiment of an auxiliary equipment drive apparatus according to the present invention.

Figure 3 is a cross-sectional view of a portion of a of a second embodiment of the present invention. showing another type of shock absorbing member.

Figure 4 is a cross-sectional view of a portion of a third embodiment of the present invention, showing yet another type of shock absorbing member.

In the drawings. the same reference numerals indicate the same or corresponding parts.


## DESCRIPTION OF THE PREFERRED EMBODIMENT

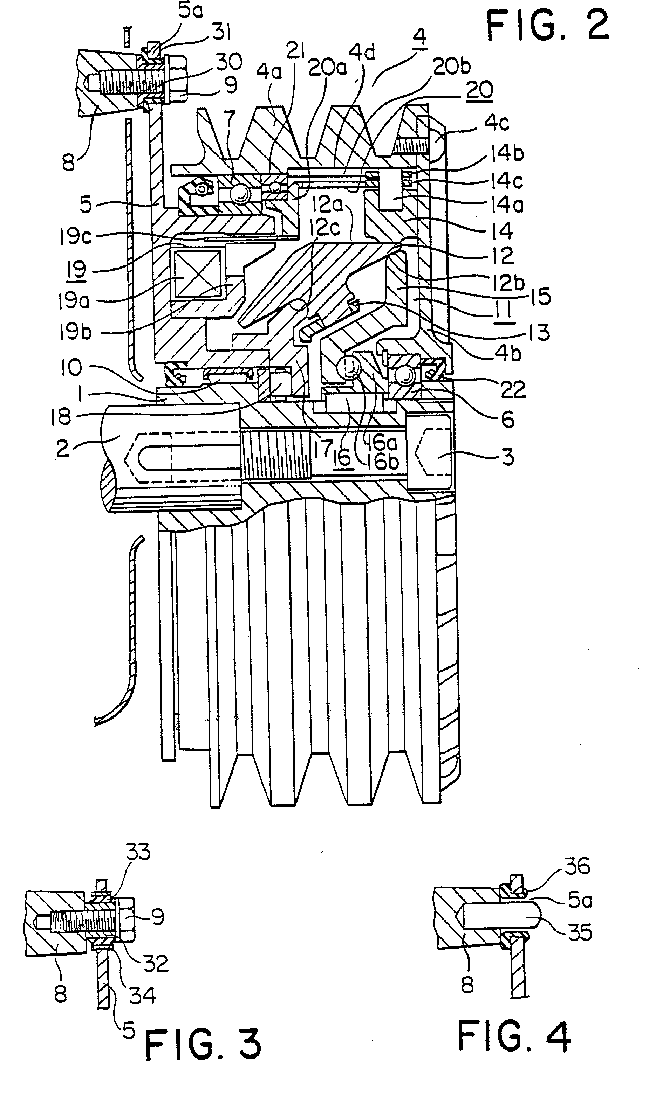

Hereinbelow, a number of embodiments of the present invention will be described while referring to Figures 2 through 4 of the accompanying drawings.  Figure 2 is a partially cross-sectional side view of a first embodiment of the present invention.  Elements bearing the same reference numbers as those in the conventional apparatus of Figure 1 are identical in structure and function, and their explanation will be omitted. This apparatus differs from the conventional apparatus of Figure 1 in the provision of a shock absorbing member between the stationary plate 5 of the apparatus and a fastener in the form of a bolt 9 by which the stationary plate 5 is secured to a boss 8 of an engine.  In this first embodiment, the shock absorbing member comprises a metallic, flanged, inner bushing 30 and a flanged, outer bushing 31 made of an elastic material such as rubber.  The metallic inner bushing 30 fits over the bolt 9 with the flanged end abutting against the surface of the boss 8 and with the other end abutting against the head of the bolt 9.  The outer bushing 31 fits over the inner bushing 30 with its flanged end held between the flange of the inner bushing 30 and the stationary plate 5, and with the other end abutting against the head of the bolt 9.

The manner in which drive force is transmitted from the crankshaft 2 to the pulley 4 in this embodiment is identical to that for the previously-described conventional apparatus. During operation of this embodiment. the crankshaft 2 of the engine and the engine boss 9 vibrate with respect to one another due to differences in their modes and phases of vibration. However. the shock absorbing member can absorb these vibrations and prevent abnormal vibrations from developing in the drive apparatus. thereby improving the performance of the apparatus.

Furthermore. as the outer bushing 31 of the shock absorbing member is made of an elastic material which can easily deform, it can compensate for dimensional errors in the boss 8 and the stationary plate 5 so that stresses will not develop in the apparatus due to small dimensional errors when it is mounted on the engine boss 8. Accordingly. it is not necessary to manufacture the boss 8 and the stationary plate 5 so as to have high dimensional accuracy. and their manufacturing costs can be decreased.

Figure 3 illustrates a portion of a second embodiment of the present invention. In this embodiment. a shock absorbing member comprises a metallic. inner bushing 32 which fits over a bolt 9. an metallic. outer bushing 34 which surrounds the metallic inner bushing 32 with a space therebetween. and a middle bushing 33 made of an elastic material such as rubber which is disposed between the inner bushing 32 and the outer bushing 34. The metallic. outer bushing 34 is secured to the inner surface of the bolt hole 5a in the stationary plate 5 by press-fitting or other means. The middle bushing 33 is secured to the inner bushing 32 and the outer bushing 34 by a suitable method such as melting or bonding. This embodiment is otherwise identical to the first embodiment. and the shock absorbing member provides the same benefits as in that embodiment.

Figure 4 illustrates a portion of a third embodiment of the present invention. In this embodiment. instead of a bolt 9. a pin 35 which is secured to the engine boss 8 is used as a fastener to mount the drive apparatus on the boss 8. The shock absorbing member comprises an elastic ring 36 made of rubber or the like which is mounted inside the bolt hole 5a of the stationary plate and which is secured to the engine boss 8 by suitable means. This embodiment is otherwise identical to the embodiment of Figure 2. and the shock absorbing member provides the same effects as in that embodiment. Furthermore. because a bolt 9 is not needed. the drive apparatus can be more easily mounted on the boss 8.

In the above-described embodiment. a planetary cone reduction gear is employed as an adjustable. stepless speed change mechanism. and the mechanism for adjusting the reduction ratio of the speed change mechanism is an overcurrent electromagnetic brake. However. it is possible to employ other types of speed change mechanisms and reduction ratio adjusting mechanisms in the present invention and still achieve the same effects.

Although explanation has been made for the case in which the motor to which the present invention is used is the engine of an automobile. the present invention can be applied to other types of motors as well and provide the same benefits.

CLAIMS:

1.   A drive apparatus for driving the auxiliary equipment of a motor. comprising:

a rotating input member which can be connected to said motor so as to be driven thereby:

a rotating output member which can be connected to said auxiliary equipment so as to drive said auxiliary equipment:

an adjustable speed change gear which is connected between said rotating input member and said rotating output member so as to transmit rotational force from said input member to said output member:

adjusting means for adjusting the reduction ratio of said speed change gear:

a fastener; and

a stationary plate which rotatably supports said rotating output body and which is secured to a stationary portion of said motor by said fastener: characterised by

a shock absorbing member disposed between said stationary plate and said fastener.

2.   A drive apparatus as claimed in Claim 1, wherein:

said fastener is a bolt which can be bolted to said stationary portion of said motor:

said stationary plate has a bolt hole formed therein through which bolt passes: and

said shock absorbing member comprises a metallic bushing having a flange at one end and an elastic bushing made of an elastic material having a flange at one end. said metallic bushing and said elastic bushing being coaxially disposed on said bolt inside said bolt hole with said metallic bushing being

11

disposed inside of said elastic bushing. the flange of said metallic bushing abutting against the surface of said stationary portion of said motor and the flange of said elastic bushing abutting against the flange of said metallic bushing and the surface of said stationary plate.

3. A drive apparatus as claimed in Claim 1, wherein:

said fastener is a bolt which is secured to said stationary portion of said motor;

said stationary plate has a bolt hole formed therein through which said bolt passes;

said shock absorbing member comprises a metallic inner bushing which is mounted on said bolt inside said bolt hole. a metallic outer bushing which is coaxially mounted on said inner metallic bushing around said inner metallic bushing and is secured to the inside of said bolt hole, and a middle bushing made of an elastic material which is coaxially disposed on said bolt between said inner metallic bushing and said outer metallic bushing and whose inner and outer surfaces are in intimate contact with said inner metallic bushing and outer metallic bushing, respectively.

4. A drive apparatus as claimed in Claim 3, wherein said middle bushing is melted to said inner and outer bushings.

5. A drive apparatus as claimed in Claim 1, wherein:

said fastener comprises a headless pin which is rigidly secured to said stationary portion of said motor;

said stationary plate has a hole formed therein through which said pin passes;

said shock absorbing material comprises a ring of an elastic material which is mounted inside of said hole and which is secured to said stationary portion of said motor so as to elastically connect said stationary plate and said stationary portion.

FIG. I

PRIOR ART

0196908

2-2

FIG. 2

FIG. 3

FIG. 4